# EUROPEAN PATENT APPLICATION

(11) **EP 4 746 304 A1**
(43) Date of publication of application: **20.05.2026**
(21) Application number: 25214140.3
(22) Date of filing: 07.11.2025
(51) Int. Cl.: H04B 3/54

(54) **POWER CONVERTER, DATA COLLECTOR, AND PLC SYSTEM**

(30) Priority: 18.11.2024 CN 202411648869; 01.09.2025 CN 202511242001
(71) Applicant: Huawei Digital Power Technologies Co., Ltd., Shenzhen, Guangdong 518043 (CN)
(72) Inventor: SHUI, Wei, Shenzhen (CN); CHEN, Chen, Shenzhen (CN)
(74) Representative: Isarpatent

(57) **Abstract**

This application provides a power converter, a data collector, and a PLC system, and pertains to the field of PLC technologies. A PLC chip in the power converter can transmit a data signal on a first frequency band, and transmit a control signal on a second frequency band. Signals of different types can be transmitted on the first frequency band and the second frequency band, and the first frequency band and the second frequency band do not overlap each other. Therefore, interference between the signals of different types can be effectively avoided, and simultaneous transmission of the signals of different types can be implemented. This not only effectively enhances flexibility of signal transmission, but also effectively avoids a transmission delay caused by a transmission conflict between the signals of different types in the PLC system, ensuring high timeliness for the data collector to perform data query and scheduling control on the power converter.

## Description

### TECHNICAL FIELD

This application relates to the field of PLC technologies, and in particular, to a power converter, a data collector, and a PLC system.

### BACKGROUND

A photovoltaic (photovoltaic, PV) power generation system usually includes components such as a photovoltaic panel, a power converter, a box-type transformer (box transformer for short), and a data collector. The power converter is configured to convert, into an alternating current (alternating current, AC), a direct current (direct current, DC) output by the photovoltaic panel. The box-type transformer is configured to perform voltage conversion on the alternating current output by the power converter. The data collector is configured to: collect power information and status information of the power converter, and perform power scheduling control on the power converter based on collected data.

The data collector and the power converter usually communicate with each other by using a power line communication (power line communication, PLC) technology. The power converter usually includes a PLC chip and a coupler. The coupler is connected to the data collector through a power line. The coupler is configured to: couple, to the power line, a sending signal output by the PLC chip, and couple, to the PLC chip, a receiving signal that is from the data collector and that is transmitted over the power line.

Information exchanged between the power converter and the data collector may include two types: data query-type information and scheduling control-type information. When the two types of information need to be transmitted between the power converter and the data collector, transmission of one type of information needs to be performed after transmission of the other type of information is completed. As a result, a transmission delay of a type of information is high.

### SUMMARY

This application provides a power converter, a data collector, and a PLC system, to resolve a technical problem that when two types of information need to be simultaneously transmitted between the power converter and the data collector, a transmission delay of one type of the information is high.

According to a first aspect, a power converter is provided. The power converter includes a PLC chip and a coupling circuit. The PLC chip is connected to the coupling circuit, and the coupling circuit is configured to connect to a data collector through a power line. The PLC chip is configured to: transmit a data signal on a first frequency band, and transmit a control signal on a second frequency band. The data signal indicates a running status of the power converter, or indicates to query a running status of the power converter. The control signal indicates to adjust the running status of the power converter. Both the data signal on the first frequency band and the control signal on the second frequency band are coupled to the power line through the coupling circuit, and the second frequency band does not overlap the first frequency band.

In the solutions provided in this application, the PLC chip in the power converter can transmit the data signal on the first frequency band, and transmit the control signal on the second frequency band. Signals of different types can be transmitted on the first frequency band and the second frequency band, and the first frequency band and the second frequency band do not overlap each other. Therefore, interference between the signals of different types can be effectively avoided, and simultaneous transmission of the signals of different types can be implemented. This not only effectively enhances flexibility of signal transmission, but also effectively avoids a transmission delay caused by a transmission conflict between the signals of different types in a PLC system, ensuring high timeliness for the data collector to perform data query and scheduling control on the power converter.

Optionally, the power converter may further include a first filter circuit and a second filter circuit. Both the first filter circuit and the second filter circuit are connected between the PLC chip and the coupling circuit. The first filter circuit is configured to filter the data signal to filter out a signal on the second frequency band. The second filter circuit is configured to filter the control signal to filter out a signal on the first frequency band.

It may be understood that, that the first filter circuit filters the data signal on the first frequency band to filter out the signal on the second frequency band can effectively avoid impact on transmission quality of the control signal caused by entering a transmission path of the control signal by the signal on the second frequency band. That the second filter circuit filters the control signal on the second frequency band to filter out the signal on the first frequency band can effectively avoid impact on transmission performance of the data signal caused by entering a transmission path of the data signal by the signal on the first frequency band.

Optionally, the PLC chip is configured to: send a first data signal on the first frequency band, receive a second data signal on the first frequency band, and receive a first control signal on the second frequency band. The first filter circuit includes a first transmit filter and a first receive filter. The second filter circuit includes a second receive filter. A passband of the first transmit filter and a passband of the first receive filter both include the first frequency band and neither overlap the second frequency band. A passband of the second receive filter includes the second frequency band and does not overlap the first frequency band. The first transmit filter is configured to filter the first data signal, and the first receive filter is configured to filter the second data signal. The second receive filter is configured to filter the first control signal. The first data signal sent by the PLC chip indicates the running status of the power converter, and the second data signal received by the PLC chip indicates to query the running status of the power converter. For example, the second data signal may include a data query instruction delivered by the data collector. The first control signal received by the PLC chip indicates to adjust the running status of the power converter. For example, the first control signal may include a scheduling control instruction delivered by the data collector.

Because the first filter circuit includes the first transmit filter and the first receive filter that are independent of each other, the first data signal and the second data signal can be respectively filtered by different filters. In this way, effective isolation between a sending signal (namely, the first data signal) and a receiving signal (namely, the second data signal) can be implemented, to prevent a component in a receiving circuit in the PLC chip from being damaged due to entering the receiving circuit by the sending signal.

Optionally, the first filter circuit further includes a switch, and the switch is connected in parallel to the first transmit filter. The PLC chip is further configured to control turn-on and turn-off of the switch. When the switch is turned off, the first transmit filter can filter a signal sent by the PLC chip, and the PLC chip can implement dual-channel communication. When the switch is turned on, the first transmit filter is bypassed, and a signal sent by the PLC chip is no longer filtered by the first transmit filter, but is directly transmitted to the coupling circuit through the turned-on switch. In this case, the PLC chip can implement single-channel communication.

Optionally, the PLC chip is configured to: send a first data signal on the first frequency band, receive a second data signal on the first frequency band, and receive a first control signal on the second frequency band. The first filter circuit includes a first transceiver filter, and the second filter circuit includes a second receive filter. A passband of the first transceiver filter includes the first frequency band and does not overlap the second frequency band, and a passband of the second receive filter includes the second frequency band and does not overlap the first frequency band. The first transceiver filter is configured to filter the first data signal and the second data signal. The second receive filter is configured to filter the first control signal.

Because the first data signal and the second data signal can share the first transceiver filter for filtering, a quantity of filters that need to be disposed in the power converter can be effectively reduced. This reduces hardware costs and structural complexity of the power converter. In addition, it may be understood that, the power converter usually does not need to report scheduling control-type information to the data collector. Therefore, the PLC chip does not need to send the control signal on the second frequency band. Correspondingly, the second filter circuit may reserve only a function of filtering a receiving signal, and does not need to have a function of filtering a sending signal. In this way, a structure of the power converter can be effectively simplified, and hardware costs of the power converter can be reduced.

Optionally, the PLC chip is configured to: send a first data signal on the first frequency band, receive a second data signal on the first frequency band, receive a first control signal on the second frequency band, and send a second control signal on the second frequency band. The second control signal is a response signal of the first control signal. For example, the second control signal may include an acknowledgment message for responding to a scheduling control instruction. The first filter circuit includes a first transmit filter and a first receive filter. The second filter circuit includes a second transmit filter and a second receive filter. A passband of the first transmit filter and a passband of the first receive filter both include the first frequency band and neither overlap the second frequency band. A passband of the second transmit filter and a passband of the second receive filter both include the second frequency band and neither overlap the first frequency band. The first transmit filter is configured to filter the first data signal, and the first receive filter is configured to filter the second data signal. The second receive filter is configured to filter the first control signal, and the second transmit filter is configured to filter the second control signal.

In the solutions provided in this application, because the power converter can further send the second control signal on the second frequency band, the power converter can also send signals of different types to the data collector on different frequency bands. This effectively enhances flexibility of information exchange between the power converter and the data collector.

In addition, because the second transmit filter and the second receive filter that are independent of each other are disposed in the second filter circuit, the second control signal and the first control signal can be respectively filtered by different filters. In this way, effective isolation between a sending signal (namely, the second control signal) and a receiving signal (namely, the first control signal) can be implemented, to prevent a component in a receiving circuit in the PLC chip from being damaged due to entering the receiving circuit by the sending signal.

Optionally, the PLC chip is configured to: send a first data signal on the first frequency band, receive a second data signal on the first frequency band, receive a first control signal on the second frequency band, and send a second control signal on the second frequency band. The first filter circuit includes a first transceiver filter, and the second filter circuit includes a second transceiver filter. A passband of the first transceiver filter includes the first frequency band and does not overlap the second frequency band. A passband of the second transceiver filter includes the second frequency band and does not overlap the first frequency band. The first transceiver filter is configured to filter the first data signal and the second data signal. The second transceiver filter is configured to filter the first control signal and the second control signal.

Because the second control signal and the first control signal can share the second transceiver filter for filtering, a quantity of filters that need to be disposed in the power converter can be effectively reduced. This reduces hardware costs and structural complexity of the power converter.

Optionally, the coupling circuit may include a coupler. The coupler is configured to be coupled to a first phase wire and a second phase wire in the power line. Correspondingly, the two filter circuits in the power converter can be coupled to the power line through one coupler. In this way, a quantity of couplers that need to be disposed in the power converter can be effectively reduced. Further, hardware costs and structural complexity of the power converter can be effectively reduced.

Optionally, the coupling circuit may include a first coupler and a second coupler. The first coupler is configured to be coupled to a first phase wire and a second phase wire in the power line, and the second coupler is configured to be coupled to the second phase wire and a third phase wire in the power line. In addition, the first coupler is configured to couple a signal on the first frequency band, and the second coupler is configured to couple a signal on the second frequency band.

For example, the first filter circuit is connected to the first coupler, and the second filter circuit is connected to the second coupler. Because signals on two different frequency bands in the power converter can be coupled to the three-phase power line through two different couplers, it can be ensured that transmission is performed on the signals on the two frequency bands through different differential line pairs. In this way, isolation between the signals on the two frequency bands can be effectively increased. This reduces impact on a signal-to-noise ratio of a receiving signal.

According to a second aspect, a data collector is provided. The data collector includes a PLC chip and a coupling circuit. The PLC chip is connected to the coupling circuit, and the coupling circuit is configured to connect to a power converter through a power line. The PLC chip is configured to: transmit a data signal on a first frequency band, and transmit a control signal on a second frequency band. The data signal indicates a running status of the power converter, or indicates to query a running status of the power converter. The control signal indicates to adjust the running status of the power converter. Both the data signal on the first frequency band and the control signal on the second frequency band are coupled to the power line through the coupling circuit, and the second frequency band does not overlap the first frequency band.

In the solutions provided in this application, the PLC chip in the data collector can transmit the data signal on the first frequency band, and transmit the control signal on the second frequency band. Signals of different types can be transmitted on the first frequency band and the second frequency band, and the first frequency band and the second frequency band do not overlap each other. Therefore, interference between the signals of different types can be effectively avoided, and simultaneous transmission of the signals of different types can be implemented. This not only effectively enhances flexibility of signal transmission, but also effectively avoids a transmission delay caused by a transmission conflict between the signals of different types in a PLC system, ensuring high timeliness for the data collector to perform data query and scheduling control on the power converter.

Optionally, the data collector further includes a first filter circuit and a second filter circuit. Both the first filter circuit and the second filter circuit are connected between the PLC chip and the coupling circuit. The first filter circuit is configured to filter the data signal to filter out a signal on the second frequency band. The second filter circuit is configured to filter the control signal to filter out a signal on the first frequency band.

It may be understood that, that the first filter circuit filters the data signal on the first frequency band to filter out the signal on the second frequency band can effectively avoid impact on transmission quality of the control signal caused by entering a transmission path of the control signal by the signal on the second frequency band. That the second filter circuit filters the control signal on the second frequency band to filter out the signal on the first frequency band can effectively avoid impact on transmission performance of the data signal caused by entering a transmission path of the data signal by the signal on the first frequency band.

Optionally, the PLC chip is configured to: receive a first data signal on the first frequency band, send a second data signal on the first frequency band, and send a first control signal on the second frequency band. The first data signal indicates the running status of the power converter, and the second data signal indicates to query the running status of the power converter. For example, the second data signal may include a data query instruction delivered by the data collector. The first control signal indicates to adjust the running status of the power converter. For example, the first control signal may include a scheduling control instruction delivered by the data collector. The first filter circuit includes a first receive filter and a first transmit filter. The second filter circuit includes a second transmit filter. A passband of the first receive filter and a passband of the first transmit filter both include the first frequency band and neither overlap the second frequency band. A passband of the second transmit filter includes the second frequency band and does not overlap the first frequency band. The first receive filter is configured to filter the first data signal, and the first transmit filter is configured to filter the second data signal. The second transmit filter is configured to filter the first control signal.

Because the first filter circuit includes the first transmit filter and the first receive filter that are independent of each other, the first data signal and the second data signal can be respectively filtered by different filters. In this way, effective isolation between a sending signal (namely, the second data signal) and a receiving signal (namely, the first data signal) can be implemented, to prevent a component in a receiving circuit in the PLC chip from being damaged due to entering the receiving circuit by the sending signal.

Optionally, the PLC chip is configured to: receive a first data signal on the first frequency band, send a second data signal on the first frequency band, and send a first control signal on the second frequency band. The first filter circuit includes a first transceiver filter, and the second filter circuit includes a second transmit filter. A passband of the first transceiver filter includes the first frequency band and does not overlap the second frequency band, and a passband of the second transmit filter includes the second frequency band and does not overlap the first frequency band. The first transceiver filter is configured to filter the first data signal and the second data signal. The second transmit filter is configured to filter the first control signal.

Because the first data signal and the second data signal can share the first transceiver filter for filtering, a quantity of filters that need to be disposed in the data collector can be effectively reduced. This reduces hardware costs and structural complexity of the data collector.

Optionally, the PLC chip is configured to: receive a first data signal on the first frequency band, send a second data signal on the first frequency band, send a first control signal on the second frequency band, and receive a second control signal on the second frequency band. The second control signal is a response signal of the first control signal. For example, the second control signal may include an acknowledgment message for responding to a scheduling control instruction. The first filter circuit includes a passband of a first receive filter and a first transmit filter, and the second filter circuit includes a second transmit filter and a second receive filter. A passband of the first receive filter and a passband of the first transmit filter both include the first frequency band and neither overlap the second frequency band. A passband of the second transmit filter and a passband of the second receive filter both include the second frequency band and neither overlap the first frequency band. The first receive filter is configured to filter the first data signal, and the first transmit filter is configured to filter the second data signal. The second transmit filter is configured to filter the first control signal, and the second receive filter is configured to filter the second control signal.

Optionally, the PLC chip is configured to: receive a first data signal on the first frequency band, send a second data signal on the first frequency band, send a first control signal on the second frequency band, and receive a second control signal on the second frequency band. The first filter circuit includes a first transceiver filter, and the second filter circuit includes a second transceiver filter. A passband of the first transceiver filter includes the first frequency band and does not overlap the second frequency band, and a passband of the second transceiver filter includes the second frequency band and does not overlap the first frequency band. The first transceiver filter is configured to filter the first data signal and the second data signal. The second transceiver filter is configured to filter the first control signal and the second control signal.

Optionally, the coupling circuit includes a coupler. The coupler is configured to be coupled to a first phase wire and a second phase wire in the power line.

Optionally, the coupling circuit includes a first coupler and a second coupler. The first coupler is configured to be coupled to a first phase wire and a second phase wire in the power line, and the second coupler is configured to be coupled to the second phase wire and a third phase wire in the power line. In addition, the first coupler is configured to couple a signal on the first frequency band, and the second coupler is configured to couple a signal on the second frequency band. For example, the first filter circuit is connected to the first coupler, and the second filter circuit is connected to the second coupler.

According to a third aspect, a PLC system is provided. The PLC system includes a data collector and at least one power converter. The data collector and the at least one power converter are connected to each other through a power line, to perform signal exchange through the power line. The power converter may be the power converter provided in the first aspect, and the data collector may be the data collector provided in the second aspect.

In conclusion, this application provides a power converter, a data collector, and a PLC system. A PLC chip in the power converter can transmit a data signal on a first frequency band, and transmit a control signal on a second frequency band. Signals of different types can be transmitted on the first frequency band and the second frequency band, and the first frequency band and the second frequency band do not overlap each other. Therefore, interference between the signals of different types can be effectively avoided, and simultaneous transmission of the signals of different types can be implemented. This not only effectively enhances flexibility of signal transmission, but also effectively avoids a transmission delay caused by a transmission conflict between the signals of different types in the PLC system, ensuring high timeliness for the data collector to perform data query and scheduling control on the power converter.

### BRIEF DESCRIPTION OF DRAWINGS

FIG. 1 is a diagram of a structure of a PLC system according to an embodiment of this application;
FIG. 2 is a diagram of a structure of another PLC system according to an embodiment of this application;
FIG. 3 is a diagram of a structure of a power converter according to an embodiment of this application;
FIG. 4 is a diagram of a structure of another power converter according to an embodiment of this application;
FIG. 5 is a diagram of a structure of still another power converter according to an embodiment of this application;
FIG. 6 is a diagram of a structure of yet another power converter according to an embodiment of this application;
FIG. 7 is a diagram of a structure of yet another power converter according to an embodiment of this application;
FIG. 8 is a diagram of a structure of yet another power converter according to an embodiment of this application;
FIG. 9 is a diagram of structures of a power converter and a data collector according to an embodiment of this application; and
FIG. 10 is a diagram of structures of another power converter and a data collector according to an embodiment of this application.

### DESCRIPTION OF EMBODIMENTS

The following describes in detail a power converter, a data collector, and a PLC system provided in embodiments of this application with reference to the accompanying drawings. Key terms in embodiments of this application are first described.

PLC: The PLC is also referred to as power line carrier communication, and is a communication mode of using power lines for data transmission.

PV module: The PV module is also referred to as a photovoltaic panel or a PV photovoltaic panel, and is configured to convert solar energy into electric energy.

Inverter: The inverter is a power converter, and is also a DC-to-AC power supply. The inverter is configured to convert a direct current of a photovoltaic panel into an alternating current.

Box-type transformer: The box-type transformer is an abbreviation of a box-type transformer, includes a low-voltage power distribution cabinet and a transformer, and is configured to perform voltage conversion on an alternating current output by an inverter.

MPPT combiner box: The MPPT combiner box-type is a combiner box-type with a maximum power point tracking (maximum power point tracking, MPPT) function.

Data collector: The data collector is a controller device for collection and control over an inverter. The data collector may communicate with the inverter through PLC and exchange information with a network management system by using a communication technology, for example, a 4th generation mobile communication technology (4th generation mobile communication technology, 4G), Wi-Fi, or a fast Ethernet (Fast Ethernet, FE).

String inverter power station: The string inverter power station is also referred to as a string photovoltaic power station. All photovoltaic modules in the power station are grouped. A direct current generated by each group of photovoltaic modules is converted into an alternating current by a string inverter. Then, alternating currents are converged and then boosted and connected to a power grid.

Photovoltaic sub-array: This concept is mainly used in a ground photovoltaic power station. The photovoltaic sub-array mainly includes a photovoltaic panel, an inverter, and a box-type transformer. That is, one box-type transformer corresponds to one photovoltaic sub-array. Several photovoltaic sub-arrays form a photovoltaic power station.

PV string: A plurality of photovoltaic panels are connected in series to form a PV string. A plurality of PV strings are connected in parallel to an inverter as direct current input.

Photovoltaic optimizer: The photovoltaic optimizer is a DC-to-DC power supply, and is configured to convert a direct current of a photovoltaic panel into an adjustable direct current. One photovoltaic optimizer may be connected to one or more photovoltaic panels.

Optimizer string: A plurality of photovoltaic optimizers are connected in series to form an optimizer string. A plurality of photovoltaic optimizer strings are connected in parallel to an inverter as direct current input.

Photovoltaic shutdown device: The photovoltaic shutdown device is a switch that can cut off output of a photovoltaic panel. Usually, one photovoltaic panel is configured with one photovoltaic shutdown device. In a dangerous case, a connection between photovoltaic panels can be quickly cut off, to reduce a voltage of a PV string.

MPPT: The MPPT means monitoring, in real time, a power (for example, a voltage and a current) output by a photovoltaic panel to ensure that the photovoltaic panel works at a maximum power.

Radio frequency front-end (radio frequency front-end, RFFE): The radio frequency front-end is a filter circuit between an antenna and a radio frequency transceiver, and mainly includes a power amplifier (power amplifier, PA), a switch (switch), a low noise amplifier (low noise amplifier, LNA), a filter (filter), and the like.

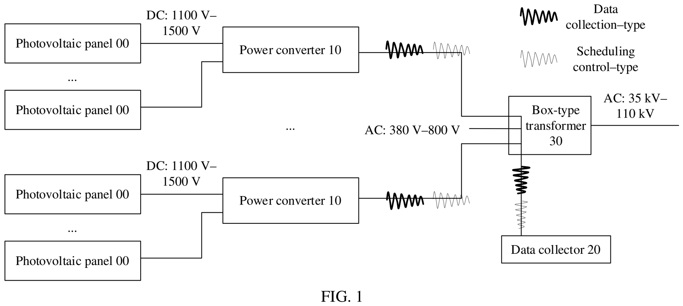

FIG. 1 is a diagram of a structure of a PLC system according to an embodiment of this application. As shown in FIG. 1, the PLC system may include at least one power converter 10 and a data collector 20. The PLC system may be used in a photovoltaic power generation system. The photovoltaic power generation system may include a ground power station system, an industrial and commercial power station system, a household power station system, or the like. A ground power station system is used as an example. Refer to FIG. 1. The photovoltaic power generation system further includes a photovoltaic panel 00 and a box-type transformer 30. Each power converter 10 may be connected to a plurality of photovoltaic panels 00, and can convert a direct current output by the plurality of photovoltaic panels 00 into an alternating current, for example, may convert a direct current of 1100 volts (V) to 1500 V into an alternating current of 380 V to 800 V. The at least one power converter 10 is further connected to the box-type transformer 30, and the box-type transformer 30 can perform voltage conversion on an alternating current output by the power converter 10, for example, may convert the alternating current into an alternating current of 35 kilovolts (kV) to 110 kV. It may be understood that for the photovoltaic power generation system, the power converter 10 may be an inverter.

In the photovoltaic power generation system, for ease of management, a power converter 10 and a photovoltaic panel 00 that are connected to each box-type transformer 30 may be collectively referred to as one photovoltaic sub-array. To obtain power information of the power converter 10 and perform power scheduling control on the power converter 10, the data collector 20 is needed to perform centralized management on the power converter 10 for each photovoltaic sub-array. The data collector 20 is used as a control center of the photovoltaic sub-array, and is usually placed beside the box-type transformer 30, as shown in FIG. 1. In addition, in consideration of costs and reliability, information is transmitted between the data collector 20 and the power converter 10 through PLC. The data collector 20 may be a primary device of the PLC system, and is also referred to as a central coordinator (central coordinator, CCO). The power converter 10 may be a secondary device of the PLC system, and is also referred to as a station (station, STA).

Output of the power converter 10 is greatly affected by light illumination, and the output changes rapidly. Consequently, power quality of a power grid may be degraded, and in serious cases, normal running of the power grid may be affected. Therefore, scheduling control needs to be performed on the power converter 10 by the power grid. In addition, based on active power and reactive power adjustment requirements of each power station operator, power scheduling control also needs to be performed on the power converter 10 by a power station controller. A scheduling control instruction of the power grid and a scheduling control instruction of the power station controller are both delivered by the data collector 20 to the power converter 10. Correspondingly, a difficulty and a challenge of PLC communication in a photovoltaic power station come along, that is, a requirement for millisecond (ms)-level low-delay PLC communication between the data collector 20 and the power converter 10 needs to be met.

As shown in FIG. 1, information exchanged between the data collector 20 and the power converter 10 usually includes two types: data collection-type information and scheduling control-type information. Data collection-type information sent by the data collector 20 to the power converter 10 may include a data query instruction, and scheduling control-type information sent by the data collector 20 to the power converter 10 may include a scheduling control instruction. The data query instruction instructs to query running status data of the specified power converter 10, for example, a voltage, a current, a power, and/or an internal status. The scheduling control instruction is used to adjust a running status of the specified power converter 10, for example, adjust the voltage, the current, the power and/or the like of the power converter 10. Data collection-type information sent by the power converter 10 to the data collector 20 may include the running status data of the power converter 10. Scheduling control-type information sent by the power converter 10 to the data collector 20 may include an acknowledgment message for responding to the scheduling control instruction.

In some embodiments, transmission of the foregoing two types of information is performed through a same PLC communication line (also referred to as a channel) in a device. Consequently, an information transmission conflict may occur at some moments. For example, when the data collector 20 sends a data query instruction to the power converter 10, if the data collector 20 further needs to send a scheduling control instruction to the power converter 10, the data collector 20 needs to wait until the data query instruction is sent, and then sends the scheduling control instruction. As a result, sending of the scheduling control instruction is delayed, and a scheduling delay is generated.

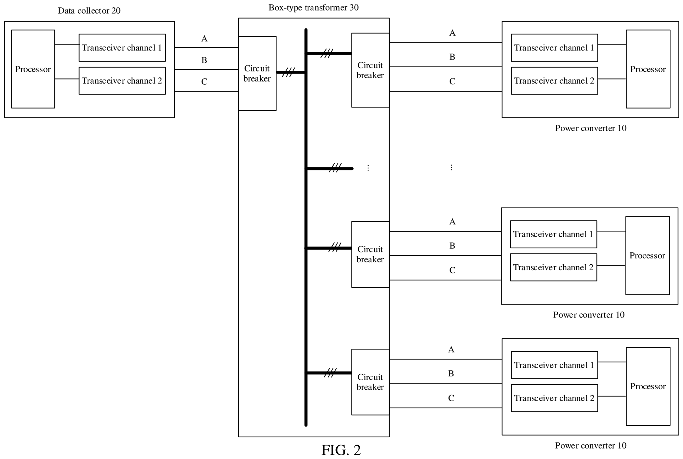

FIG. 2 is a diagram of a structure of another PLC system according to an embodiment of this application. As shown in FIG. 2, a box-type transformer 30 may include a plurality of circuit breakers. A data collector 20 is connected to one circuit breaker (referred to as a first circuit breaker below) through a power line, and each of a plurality of power converters 10 is connected to one circuit breaker (referred to as a second circuit breaker below) through the power line. The first circuit breaker is connected to a plurality of second circuit breakers through copper bars. The power line may be a differential line pair including two signal lines. The two signal lines in the power line may be two phase wires, for example, may be any two of a phase wire A, a phase wire B, and a phase wire C. Alternatively, one of the two signal lines in the power line may be a phase wire, and the other may be a neutral wire (namely, an N wire).

Still refer to FIG. 2. Both the data collector 20 and each power converter 10 may include two transceiver channels, namely, a transceiver channel 1 and a transceiver channel 2. An operating frequency band of the transceiver channel 1 is a first frequency band, that is, the transceiver channel 1 is configured to send and receive signals on the first frequency band. In addition, the signal on the first frequency band may carry data collection-type information, that is, the signal on the first frequency band is a data signal, and the transceiver channel 1 may also be referred to as a data collection channel. An operating frequency band of the transceiver channel 2 is a second frequency band, that is, the transceiver channel 2 is configured to send and receive signals on the second frequency band. In addition, the signal on the second frequency band may carry scheduling control-type information, that is, the signal on the second frequency band is a control signal, and the transceiver channel 2 may also be referred to as a control channel. The first frequency band and the second frequency band are different and do not overlap each other. It can be learned from FIG. 2 that the PLC system provided in this embodiment of this application is a dual-channel system, and the dual-channel system can transmit information of different types through two channels with different frequency bands. In this way, it can be ensured that transmission of two types of information in the PLC system can be simultaneously performed through different transceiver channels, and the two types of information do not interfere with each other. This effectively avoids a scheduling delay caused by an information transmission conflict.

It may be understood that both the data collector 20 and each power converter 10 may include a PLC chip, a first signal transceiver circuit, and a second signal transceiver circuit. The PLC chip may include: a processor, a first transceiver controller, and a second transceiver controller. The processor is configured to: generate to-be-sent information (for example, running status data or a scheduling control instruction), and process received information. Each of the first transceiver controller and the second transceiver controller may include a PLC modem module and a PLC analog front-end (analog front-end, AFE). The PLC modem module may be configured to modulate the to-be-sent information output by the processor, to obtain a sending signal. The PLC AFE is configured to process the sending signal, and the processing may include digital-to-analog conversion, power amplification, filtering, and the like. The PLC AFE may be further configured to process a receiving signal and then transmit a processed signal to the PLC modem module. The processing may include analog-to-digital conversion, power amplification, filtering, and the like. The PLC modem module is further configured to demodulate the processed receiving signal, and transmit information obtained after demodulation to the processor.

It may be further understood that, for the data collector 20 and each power converter 10, the first transceiver controller and the first signal transceiver circuit may form the transceiver channel 1, which is also referred to as a channel 1; and the second transceiver controller and the second signal transceiver circuit may form the transceiver channel 2, which is also referred to as a channel 2. The first transceiver controller is configured to send and receive signals on the first frequency band, and the first signal transceiver circuit is configured to process the signal on the first frequency band. The second transceiver controller is configured to send and receive signals on the second frequency band, and the second signal transceiver circuit is configured to process the signal on the second frequency band. Because the first frequency band and the second frequency band are different and do not overlap each other, interference between signals transmitted in the two transceiver channels can be effectively avoided. Therefore, it can be ensured that the two types of information can be simultaneously sent and received through different transceiver channels. This effectively mitigates a technical problem that a scheduling delay caused by an information conflict is uncontrollable.

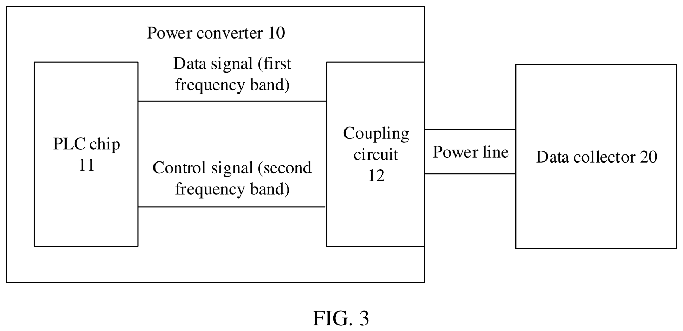

FIG. 3 is a diagram of a structure of a power converter according to an embodiment of this application. The power converter 10 may be used in the PLC system shown in FIG. 1 or FIG. 2. As shown in FIG. 3, the power converter 10 provided in this embodiment of this application includes a PLC chip 11 and a coupling circuit 12. The PLC chip 11 is connected to the coupling circuit 12. The coupling circuit 12 is configured to connect to a data collector 20 through a power line.

The PLC chip 11 is configured to: transmit a data signal on a first frequency band, and transmit a control signal on a second frequency band. The data signal indicates a running status of the power converter 10, or indicates to query a running status of the power converter 10. The control signal indicates to adjust the running status of the power converter 10. The running status of the power converter 10 may be a running status of the power converter 10 during execution of a power conversion operation, and may include a voltage, a current, a power, an internal status, and/or the like.

Both the data signal on the first frequency band and the control signal on the second frequency band are coupled to the power line through the coupling circuit 12. In addition, the second frequency band does not overlap the first frequency band.

Optionally, a bandwidth of the first frequency band may be the same as a bandwidth of the second frequency band, and there may be a specific frequency spacing between the two frequency bands, to effectively avoid signal interference.

For example, both the bandwidth of the first frequency band and the bandwidth of the second frequency band may be 0.8 megahertz (MHz), and the frequency spacing between the two frequency bands may be 0.3 MHz. For example, one of the first frequency band and the second frequency band may be 0.5 megahertz (MHz) to 1.3 MHz, and the other frequency band may be 1.6 MHz to 2.4 MHz.

In this embodiment of this application, that the PLC chip 11 transmits the data signal on the first frequency band may include: the PLC chip 11 sends a first data signal and/or receives a second data signal on the first frequency band. That the PLC chip 11 transmits the control signal on the second frequency band may include: the PLC chip 11 receives a first control signal and/or sends a second control signal on the second frequency band. The first data signal and the second control signal may be coupled to the power line through the coupling circuit 12, and the second data signal and the first control signal may be coupled from the power line to the PLC chip 11 through the coupling circuit 12.

In the power converter provided in this embodiment of this application, the PLC chip can transmit the data signal on the first frequency band, and transmit the control signal on the second frequency band. Signals of different types can be transmitted on the first frequency band and the second frequency band, and the first frequency band and the second frequency band do not overlap each other. Therefore, interference between the signals of different types can be effectively avoided, and simultaneous transmission of the signals of different types can be implemented. This not only effectively enhances flexibility of signal transmission, but also effectively avoids a transmission delay caused by a transmission conflict between the signals of different types in the PLC system, ensuring high timeliness for the data collector to perform data query and scheduling control on the power converter.

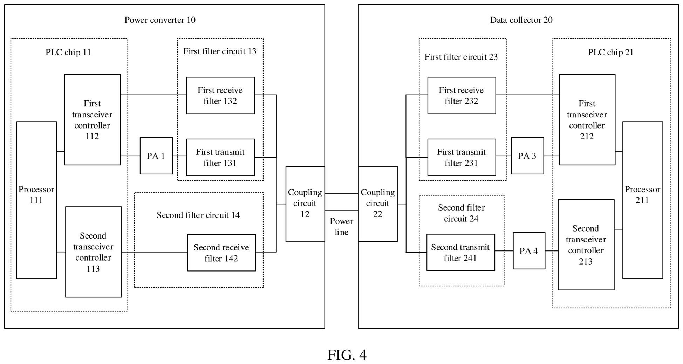

Optionally, FIG. 4 is a diagram of a structure of another power converter according to an embodiment of this application. As shown in FIG. 4, a PLC chip 11 may include a processor 111, a first transceiver controller 112, and a second transceiver controller 113. The processor 111 is configured to: generate to-be-sent information (for example, running status data), and process received information (for example, a data query instruction and a scheduling control instruction). Each of the first transceiver controller 112 and the second transceiver controller 113 may include a PLC modem module and a PLC AFE. For function implementation of the PLC modem module and the PLC AFE, refer to the foregoing descriptions. Details are not described herein again.

Optionally, still refer to FIG. 4. The power converter 10 may further include a first filter circuit 13 and a second filter circuit 14. In addition, both the first filter circuit 13 and the second filter circuit 14 are connected between the PLC chip 11 and a coupling circuit 12.

The first filter circuit 13 is configured to filter a data signal, to pass a signal on a first frequency band and at least filter out a signal on a second frequency band. The second filter circuit 14 is configured to filter a control signal, to pass a signal on the second frequency band and at least filter out a signal on the first frequency band.

In the power converter provided in this embodiment of this application, the first filter circuit 13 filters the data signal on the first frequency band to filter out the signal on the second frequency band. In this way, impact on transmission quality of the control signal caused by entering a transmission path of the control signal by the signal on the second frequency band can be effectively avoided. The second filter circuit 14 filters the control signal on the second frequency band to filter out the signal on the first frequency band. In this way, impact on transmission quality of the data signal caused by entering a transmission path of the data signal by the signal on the first frequency band can be effectively avoided.

Optionally, the PLC chip 11 may be configured to: send a first data signal on the first frequency band, receive a second data signal on the first frequency band, and receive a first control signal on the second frequency band.

Correspondingly, the coupling circuit 12 is configured to: couple, to the power line, the first data signal sent by the PLC chip 11, receive, from the power line, the second data signal and the first control signal from a data collector 20, and transmit the second data signal and the first control signal to the PLC chip 11. The first data signal indicates the running status of the power converter 10, and the second data signal indicates to query the running status of the power converter 10. For example, the first data signal may include running status data of the power converter 10, and the second data signal may include a data query instruction delivered by the data collector 20. The first control signal indicates to adjust the running status of the power converter 10. For example, the first control signal may include a scheduling control instruction delivered by the data collector 20.

In this embodiment of this application, the first filter circuit 13 may be implemented in different manners. As a first optional implementation of the first filter circuit 13, as shown in FIG. 4, the first filter circuit 13 may include a first transmit filter 131 and a first receive filter 132. A passband of the first transmit filter 131 and a passband of the first receive filter 132 both include the first frequency band and neither overlap the second frequency band. That is, both the first transmit filter 131 and the first receive filter 132 can pass a signal on the first frequency band and at least filter out a signal on the second frequency band. In addition, the first transmit filter 131 is configured to filter the first data signal, and the first receive filter 132 is configured to filter the second data signal.

For example, both the first transmit filter 131 and the first receive filter 132 may be band-pass filters, and passbands of the first transmit filter 131 and the first receive filter 132 may both be the first frequency band, or may both be slightly greater than the first frequency band. Alternatively, the first transmit filter 131 may be a band-pass filter, and the passband of the first transmit filter 131 may be the first frequency band, or may be slightly greater than the first frequency band. The first receive filter 132 may be a low-pass or high-pass filter, and the passband of the first receive filter 132 may include the first frequency band.

Optionally, as shown in FIG. 4, the power converter 10 may further include a first power amplifier PA 1. The power amplifier is also referred to as a linear drive, line drive for short. The first power amplifier PA 1 is separately connected to the PLC chip 11 and the first transmit filter 131, and the first transmit filter 131 is further connected to the coupling circuit 12. The first receive filter 132 is separately connected to the coupling circuit 12 and the PLC chip 11. The first power amplifier PA 1 is configured to amplify the first data signal output by the PLC chip 11, and the first transmit filter 131 is configured to: filter an amplified first data signal, and output a filtered first data signal to the coupling circuit 12. The first receive filter 132 is configured to: filter the second data signal on which the coupling circuit 12 performs transmission, and transmit a filtered second data signal to the PLC chip 11.

For example, refer to FIG. 4. Both the first power amplifier PA 1 and the first receive filter 132 may be connected to the first transceiver controller 112 in the PLC chip 11. The first power amplifier PA 1 may receive the first data signal output by the first transceiver controller 112. The first receive filter 132 may transmit the filtered second data signal to the first transceiver controller 112 for demodulation performed by the first transceiver controller 112.

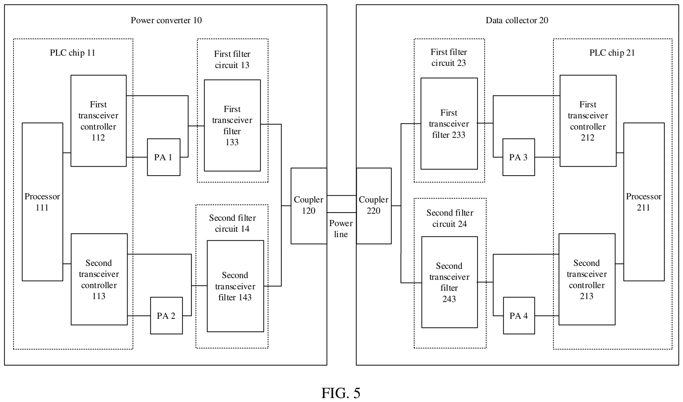

As a second optional implementation of the first filter circuit 13, as shown in FIG. 5, the first filter circuit 13 may include a first transceiver filter 133. A passband of the first transceiver filter 133 includes the first frequency band and does not overlap the second frequency band, that is, the first transceiver filter 133 is configured to pass a signal on the first frequency band, and can at least filter out a signal on the second frequency band. For example, the first transceiver filter 133 may be a band-pass filter, and the passband of the first transceiver filter 133 may be the first frequency band, or may be slightly greater than the first frequency band. In addition, the first transceiver filter 133 is configured to filter the first data signal and the second data signal.

For the second implementation, still refer to FIG. 5. A first power amplifier PA 1 may be separately connected to the PLC chip 11 and the first transceiver filter 133, and the first transceiver filter 133 is further connected to the PLC chip 11 and the coupling circuit 12 (for example, a coupler 120). The first power amplifier PA 1 is configured to amplify the first data signal output by the PLC chip 11. The first transceiver filter 133 is configured to: filter an amplified first data signal, and output a filtered first data signal to the coupling circuit 12. The first transceiver filter 133 is further configured to: filter the second data signal on which the coupling circuit 12 performs transmission, and transmit a filtered second data signal to the PLC chip 11.

For the first implementation of the first filter circuit 13, because the first filter circuit 13 includes the first transmit filter 131 and the first receive filter 132 that are independent of each other, the first data signal and the second data signal can be respectively filtered by different filters. In this way, effective isolation between a sending signal (namely, the first data signal) and a receiving signal (namely, the second data signal) can be implemented, to prevent a component in a receiving circuit in the first transceiver controller 112 from being damaged due to entering the receiving circuit by the sending signal.

For the second implementation of the first filter circuit 13, because the first data signal and the second data signal can share the first transceiver filter 133 for filtering, a quantity of filters that need to be disposed in the power converter 10 can be effectively reduced. This reduces hardware costs and structural complexity of the power converter 10. In addition, in the second implementation, to prevent a sending signal from damaging a component in a receiving circuit in the first transceiver controller 112, an attenuator (for example, a resistor) may be further disposed at a receive end of the first transceiver controller 112, to perform signal attenuation on the sending signal.

Optionally, as shown in FIG. 4, the second filter circuit 14 may include a second receive filter 142 configured to filter the first control signal. A passband of the second receive filter 142 includes the second frequency band and does not overlap the first frequency band, that is, the second receive filter 142 is configured to: pass a signal on the second frequency band, and at least filter out a signal on the first frequency band. For example, the second receive filter 142 may be a band-pass filter, and the passband of the second receive filter 142 may be the second frequency band, or may be slightly greater than the second frequency band. Alternatively, the second receive filter 142 may be a low-pass or high-pass filter, and the passband of the second receive filter 142 may include the second frequency band.

Still refer to FIG. 4. The second receive filter 142 is separately connected to the PLC chip 11 and the coupling circuit 12. The second receive filter 142 is configured to: filter the first control signal on which the coupling circuit 12 performs transmission, and transmit a filtered first control signal to the PLC chip 11. For example, refer to FIG. 4. The second receive filter 142 may be connected to the second transceiver controller 113 in the PLC chip 11. The second receive filter 142 may transmit the filtered first control signal to the second transceiver controller 113 for demodulation performed by the second transceiver controller 113.

It can be learned from FIG. 4 that in the power converter 10 provided in this embodiment of this application, the first transceiver controller 112, the first power amplifier PA 1, and the first filter circuit 13 may form a transceiver channel 1, and an operating frequency band of the transceiver channel 1 is the first frequency band. In addition, the transceiver channel 1 can generate and send the first data signal on the first frequency band, and also receive and process the second data signal on the first frequency band. That is, the transceiver channel 1 has both a function of sending a signal on the first frequency band and a function of receiving a signal on the first frequency band. The second transceiver controller 113 and the second filter circuit 14 may form a transceiver channel 2, and an operating frequency band of the transceiver channel 2 is the second frequency band. In addition, the transceiver channel 2 may reserve only a function of receiving a signal on the second frequency band and does not have a signal sending function. Correspondingly, the transceiver channel 2 may be referred to as a receiving channel 2, and the second transceiver controller 113 may be referred to as a receiving controller.

It may be understood that, the power converter 10 may not need to report scheduling control-type information (for example, an acknowledgment message) to the data collector 20. Therefore, the transceiver channel 2 may reserve only a signal receiving function and does not have a signal sending function. Therefore, a sending circuit does not need to be disposed on the transceiver channel 2, for example, a PA does not need to be disposed. This effectively simplifies the structure of the power converter 10 and reduces hardware costs of the power converter 10.

Optionally, the transceiver channel 2 may alternatively have a signal sending function. That is, the PLC chip 11 can receive the first control signal on the second frequency band, and can also send a second control signal on the second frequency band. The second control signal is a response signal of the first control signal. For example, the second control signal may include an acknowledgment message for responding to the scheduling control instruction. Correspondingly, the second filter circuit 14 may be further configured to filter the second control signal to filter out a signal on the first frequency band. The coupling circuit 12 may be further configured to couple a filtered second control signal to the power line.

A signal sending function is also configured for the transceiver channel 2, that is, the transceiver channel 2 can receive a signal and send a signal on the second frequency band, so that the power converter 10 can also send information of different types to the data collector 20 on different frequency bands. This effectively enhances flexibility of information exchange between the power converter 10 and the data collector 20.

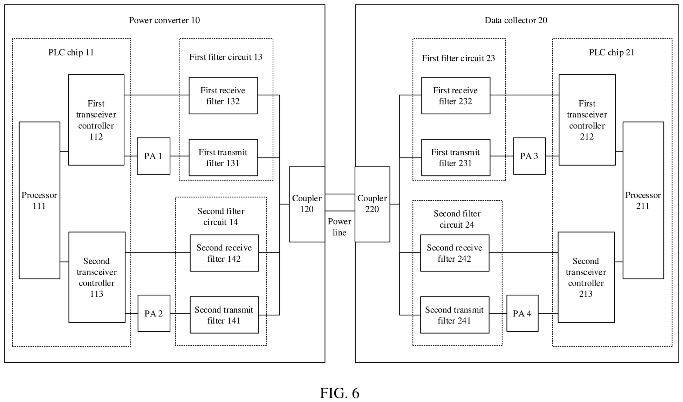

For a scenario in which the transceiver channel 2 has a signal sending function, the second filter circuit 14 may also be implemented in different manners. As a first optional implementation of the second filter circuit 14, as shown in FIG. 6, the second filter circuit 14 may include a second transmit filter 141 and a second receive filter 142. A passband of the second transmit filter 141 and a passband of the second receive filter 142 both include the second frequency band and neither overlap the first frequency band. That is, both the second transmit filter 141 and the second receive filter 142 are configured to: pass a signal on the second frequency band, and at least filter out a signal on the first frequency band. In addition, the second transmit filter 141 may be configured to filter the second control signal, and the second receive filter 142 may be configured to filter the first control signal.

For example, both the second transmit filter 141 and the second receive filter 142 may be band-pass filters, and passbands of the second transmit filter 141 and the second receive filter 142 may both be the second frequency band, or may both be slightly greater than the second frequency band. Alternatively, the second transmit filter 141 may be a band-pass filter, and the passband of the second transmit filter 141 may be the second frequency band, or may be slightly greater than the second frequency band. The second receive filter 142 may be a low-pass or high-pass filter, and the passband of the second receive filter 142 may include the second frequency band.

Still refer to FIG. 6. The power converter 10 may further include a second power amplifier PA 2. The second power amplifier PA 2 is separately connected to the PLC chip 11 and the second transmit filter 141, and the second transmit filter 141 is further connected to the coupling circuit 12 (for example, the coupler 120). The second receive filter 142 is separately connected to the coupling circuit 12 (for example, the coupler 120) and the PLC chip 11. The second power amplifier PA 2 is configured to amplify the second control signal output by the PLC chip 11. The second transmit filter 141 is configured to: filter an amplified second control signal, and output a filtered second control signal to the coupling circuit 12. The second receive filter 142 is configured to: filter the first control signal on which the coupling circuit 12 performs transmission, and transmit a filtered first control signal to the PLC chip 11.

For example, refer to FIG. 6. Both the second power amplifier PA 2 and the second receive filter 142 may be connected to the second transceiver controller 113 in the PLC chip 11. The second power amplifier PA 2 may receive the first data signal output by the second transceiver controller 113. The second receive filter 142 may transmit the filtered first control signal to the second transceiver controller 113 for demodulation performed by the second transceiver controller 113.

As a second optional implementation of the second filter circuit 14, as shown in FIG. 5, the second filter circuit 14 may include a second transceiver filter 143. A passband of the second transceiver filter 143 includes the second frequency band and does not overlap the first frequency band, that is, the second transceiver filter 143 is configured to: pass a signal on the second frequency band, and at least filter out a signal on the first frequency band. For example, the second transceiver filter 143 may be a band-pass filter, and the passband of the second transceiver filter 143 may be the second frequency band, or may be slightly greater than the second frequency band. In addition, the second transceiver filter 143 may be configured to filter the second control signal and the first control signal.

Still refer to FIG. 5. The second power amplifier PA 2 is separately connected to the PLC chip 11 and the second transceiver filter 143, and the second transceiver filter 143 is further connected to the PLC chip 11 and the coupling circuit 12 (for example, the coupler 120). The second power amplifier PA 2 is configured to amplify the second control signal output by the PLC chip 11. The second transceiver filter 143 is configured to: filter an amplified second control signal, and output a filtered second control signal to the coupling circuit 12. In addition, the second transceiver filter 143 is further configured to: filter the first control signal on which the coupling circuit 12 performs transmission, and transmit a filtered first control signal to the PLC chip 11.

For the first implementation of the second filter circuit 14, because the second transmit filter 141 and the second receive filter 142 that are independent of each other are disposed, the second control signal and the first control signal can be respectively filtered by different filters. In this way, effective isolation between a sending signal (namely, the second control signal) and a receiving signal (namely, the first control signal) can be implemented, to prevent a component in a receiving circuit in the second transceiver controller 113 from being damaged due to entering the receiving circuit by the sending signal.

For the second implementation of the second filter circuit 14, because the second control signal and the first control signal can share the second transceiver filter 143 for filtering, a quantity of filters that need to be disposed in the power converter 10 can be effectively reduced. This reduces hardware costs and structural complexity of the power converter 10. In addition, in the second implementation, to prevent a sending signal from damaging a component in a receiving circuit in the second transceiver controller 113, an attenuator may be further disposed at a receive end of the second transceiver controller 113, to perform signal attenuation on the sending signal.

Based on the foregoing description, it can be learned that the first filter circuit 13 uses a same frequency band (that is, the first frequency band) for signal sending and receiving. To avoid co-channel interference, the first transceiver controller 112 may control signal sending and receiving to be performed in a time-division manner. That is, when the transceiver channel 1 of the power converter 10 is in a sending state, the first transceiver controller 112 may disable a receiving function of the transceiver channel 1; and when the transceiver channel 1 of the power converter 10 is in a receiving state, the first transceiver controller 112 may disable a sending function of the transceiver channel 1. That the first transceiver controller 112 disables the receiving function of the transceiver channel 1 may mean that: the first transceiver controller 112 does not process a receiving signal (namely, the second data signal) on which the first receive filter 132 (or the first transceiver filter 133) performs transmission. That the first transceiver controller 112 disables the sending function of the transceiver channel 1 may mean that: the first transceiver controller 112 turns off the first power amplifier PA 1.

Similarly, because the second filter circuit 14 also uses a same frequency band (that is, the first frequency band) for signal sending and receiving, to avoid co-channel interference, the second transceiver controller 113 may control signal sending and receiving to be performed in a time-division manner. That is, when the transceiver channel 2 of the power converter 10 is in a sending state, the second transceiver controller 113 may disable a receiving function of the transceiver channel 2; and when the transceiver channel 2 of the power converter 10 is in a receiving state, the second transceiver controller 113 may disable a sending function of the transceiver channel 2. That the second transceiver controller 113 disables the receiving function of the transceiver channel 2 may mean that: the second transceiver controller 113 does not process a receiving signal (namely, the first control signal) on which the second receive filter 142 (or the second transceiver filter 143) performs transmission. That the second transceiver controller 113 disables the sending function of the transceiver channel 2 may mean that: the second transceiver controller 113 turns off the second power amplifier PA 2.

In this embodiment of this application, the coupling circuit 12 may be implemented in different manners. As a first optional implementation of the coupling circuit 12, as shown in FIG. 5 and FIG. 6, the coupling circuit 12 may include the coupler 120. The coupler 120 is configured to be coupled to a first phase wire and a second phase wire in the power line. The first phase wire and the second phase wire may be any two of a phase wire A, a phase wire B, and a phase wire C. Certainly, the coupler 120 may alternatively be coupled to a neutral wire and a phase wire in the power line.

For the first implementation of the coupling circuit 12, as shown in FIG. 4 to FIG. 6, the first filter circuit 13 and the second filter circuit 14 in the power converter 10 can be coupled to the power line through one coupler 120. In this way, a quantity of couplers that need to be disposed in the power converter 10 can be effectively reduced. Further, hardware costs and structural complexity of the power converter 10 can be effectively reduced.

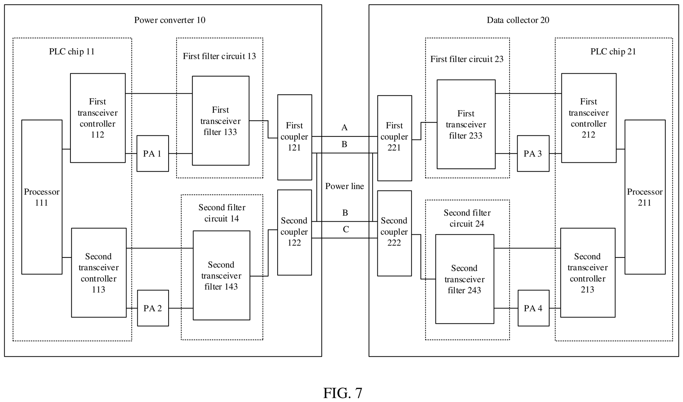

As a second optional implementation of the coupling circuit 12, as shown in FIG. 7, the coupling circuit 12 may include a first coupler 121 and a second coupler 122. The first coupler 121 is configured to couple a signal on the first frequency band, for example, the first data signal and the second data signal. The second coupler 122 is configured to couple a signal on the second frequency band, for example, the first control signal and the second control signal.

Still refer to FIG. 7. The first filter circuit 13 is connected to the first coupler 121, and the second filter circuit 14 is connected to the second coupler 122. In addition, the first coupler 121 is configured to be coupled to a first phase wire and a second phase wire in the power line, and the second coupler 122 is configured to be coupled to the second phase wire and a third phase wire in the power line. That is, the two couplers may share the second phase wire.

The first phase wire and the second phase wire may be any two of a phase wire A, a phase wire B, and a phase wire C. For example, refer to FIG. 7. The first phase wire may be an A phase wire, the second phase wire may be a B phase wire, and the third phase wire may be a C phase wire. For the second implementation of the coupling circuit 12, because signals on two frequency bands can be coupled to the three-phase power line through two different couplers, it can be ensured that transmission is performed on the signals on the two frequency bands through different differential line pairs. In this way, isolation between the signals on the two frequency bands can be effectively increased. This reduces impact on a signal-to-noise ratio of a receiving signal.

It may be understood that each of the two couplers may alternatively be coupled to a neutral wire and a phase wire in the power line, and the two couplers may share the neutral wire or the phase wire. It may be further understood that a coupler (for example, the coupler 120, the first coupler 121, and the second coupler 122) in the coupling circuit 12 may include coupling components such as a capacitor, an inductor, a signal transformer, and/or a magnetic ring.

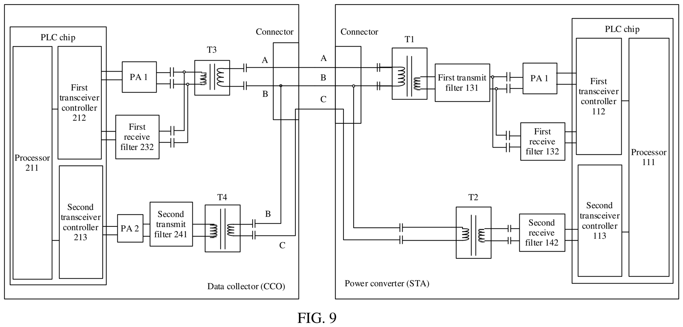

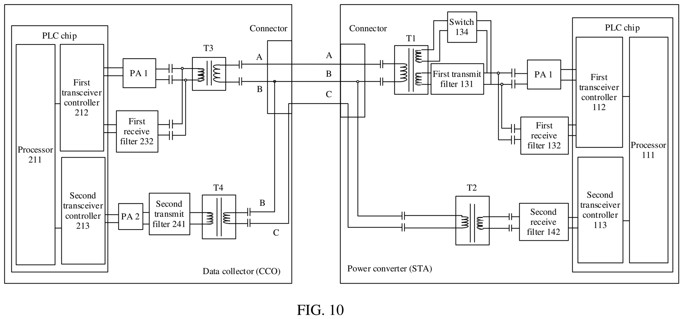

In a scenario in which the first filter circuit 13 includes the first transmit filter 131 and the first receive filter 132, as shown in FIG. 4, the first transmit filter 131 and the first receive filter 132 may be connected to the coupling circuit 12; or as shown in FIG. 9, the first receive filter 132 may be connected to the coupling circuit 12 (for example, a signal transformer T1 shown in FIG. 9) through the first transmit filter 131. In addition, FIG. 9 and FIG. 10 are specific details of FIG. 4. In embodiments shown in FIG. 9 and FIG. 10, the coupling circuit 12 in the embodiment shown in FIG. 4 specifically includes signal transformers T1 and T2, capacitors connected to the signal transformers T1 and T2, and capacitors connected to filters. In addition, with reference to FIG. 9 and FIG. 10, the power converter may further include a connector, and the coupling circuit 12 may be connected to the power line through the connector.

In this embodiment of this application, to facilitate compatibility with a single-channel device (for example, a single-channel data collector), the power converter can further switch from a dual-channel mode to a single-channel mode. In the single-channel mode, the power converter may communicate with another device through one channel (for example, the transceiver channel 1). Optionally, as shown in FIG. 10, the second filter circuit 14 of the power converter includes the second receive filter 142, and does not need to include a transmit filter. In other words, the transceiver channel 2 of the power converter reserves only a signal receiving function and does not have a signal sending function. On this basis, still refer to FIG. 10. The first filter circuit 13 in the power converter may further include a switch 134. The switch 134 is connected in parallel to the first transmit filter 131. The PLC chip is further configured to control turn-on and turn-off of the switch 134.

When the switch 134 is turned off, the first transmit filter 131 can filter a signal sent by the PLC chip, and the power converter works in the dual-channel mode, to be specific, the power converter can transmit a data signal and a control signal through the transceiver channel 1 and the transceiver channel 2 respectively. When the switch 134 is turned on, the power converter works in the single-channel mode. In this case, the first transmit filter 131 is bypassed, and a signal sent by the PLC chip is no longer filtered by the first transmit filter 131, but is directly transmitted to the coupling circuit 12 through the turned-on switch 134. In addition, in the single-channel mode, the power converter may close the transceiver channel 2, and receive a signal through the transceiver channel 1. For example, the second transceiver controller 113 in the power converter does not process a signal transmitted by the second receive filter 142, so that the transceiver channel 2 is closed.

In this embodiment of this application, a communication frequency band used when the power converter and the data collector work in the single-channel mode may be a third frequency band. In other words, PLC chips in the power converter and the data collector may both transmit a signal in the third frequency band. For example, the operating frequency band of the transceiver channel 1 may be switched to the third frequency band. The third frequency band is usually wide. For example, the third frequency band may include the first frequency band and the second frequency band. It can be learned that, in the single-channel mode, if the first transmit filter 131 continues to filter a signal sent by the PLC chip, signals on some useful frequency bands are filtered out, and communication quality of a single channel is affected. Therefore, in this embodiment of this application, when the power converter switches from the dual-channel mode to the single-channel mode, the PLC chip in the power converter can control the switch 134 to be turned on, to bypass the first transmit filter 131, and ensure that a signal sent by the PLC chip can be directly transmitted to the coupling circuit 12 through the switch 134. In addition, the PLC chip may transmit a control signal and a data signal in the third frequency band.

Optionally, the switch 134 may be a controllable switch component, for example, a relay or a switching transistor. The switching transistor may be, for example, a metal-oxide-semiconductor field-effect transistor (metal-oxide-semiconductor field-effect transistor, MOSFET).

Optionally, as shown in FIG. 10, the coupling circuit 12 in the power converter includes a signal transformer T1. A primary-side winding of the signal transformer T1 is connected to the power line, for example, connected to the phase wire A and the phase wire B. In addition, the signal transformer T1 has a first secondary-side winding and a second secondary-side winding. The first secondary-side winding is connected to one end of the switch 134, and the second secondary-side winding is connected to one end of the first transmit filter 131. The other end of the switch 134 is connected to the other end of the first transmit filter 131. In addition, the other end of the switch 134 and the other end of the first transmit filter 131 are further connected to one end of the first receive filter 132, and the other end of the first receive filter 132 is connected to the PLC chip. In this embodiment of this application, two windings are disposed on a secondary side of the signal transformer T1, to be respectively connected to the switch 134 and the first transmit filter 131, so that a receiving signal can be effectively prevented from entering the first transmit filter 131, that is, the receiving signal is effectively isolated, to ensure good communication quality of a single channel.

In this embodiment of this application, in a scenario in which the power converter can implement switching between the single-channel mode and the dual-channel mode, a passband range of the first receive filter 132 may be wide. For example, the passband of the first receive filter 132 may be the third frequency band or slightly greater than the third frequency band. Therefore, it can be ensured that in the single-channel mode, a signal on the third frequency band can pass through the first receive filter 132, to ensure good communication quality of a single channel. In addition, in the dual-channel mode, because the transceiver channel 2 reserves only a signal receiving function, that is, the transceiver channel 2 does not send a signal, impact of a sending signal on a receiving signal of the transceiver channel 1 can be avoided.

In conclusion, an embodiment of this application provides a power converter. A PLC chip in the power converter can transmit a data signal on a first frequency band, and transmit a control signal on a second frequency band. Signals of different types can be transmitted on the first frequency band and the second frequency band, and the first frequency band and the second frequency band do not overlap each other. Therefore, interference between the signals of different types can be effectively avoided, and simultaneous transmission of the signals of different types can be implemented. This not only effectively enhances flexibility of signal transmission, but also effectively avoids a transmission delay caused by a transmission conflict between the signals of different types in a PLC system, ensuring high timeliness for a data collector to perform data query and scheduling control on the power converter.

An embodiment of this application further provides a data collector. The data collector may be used in the PLC system shown in FIG. 1 or FIG. 2. Refer to FIG. 1 and FIG. 2. The data collector 20 may be connected to at least one power converter 10 through a power line. As shown in FIG. 4, the data collector 20 may include a PLC chip 21 and a coupling circuit 22. The PLC chip 21 is connected to the coupling circuit 22. The coupling circuit 22 is configured to connect to the power converter 10 through the power line.

The PLC chip 21 is configured to: transmit a data signal on a first frequency band, and transmit a control signal on a second frequency band. The data signal indicates a running status of the power converter 10, or indicates to query a running status of the power converter 10. The control signal indicates to adjust the running status of the power converter 10. The running status of the power converter 10 may be a running status of the power converter 10 during execution of a power conversion operation, and may include a voltage, a current, a power, an internal status, and/or the like.

Both the data signal on the first frequency band and the control signal on the second frequency band are coupled to the power line through a coupling circuit 12. The second frequency band does not overlap the first frequency band. In addition, bandwidths of the two frequency bands may be the same, and there may be a specific frequency spacing between the two frequency bands, to effectively avoid signal interference. For example, one of the first frequency band and the second frequency band may be 0.5 MHz to 1.3 MHz, and the other frequency band may be 1.6 MHz to 2.4 MHz.

In this embodiment of this application, that the PLC chip 21 transmits the data signal on the first frequency band may include: the PLC chip 21 receives a first data signal and/or sends a second data signal on the first frequency band. That the PLC chip 21 transmits the control signal on the second frequency band may include: the PLC chip sends a first control signal and/or receives a second control signal on the second frequency band. The second data signal and the first control signal may be coupled to the power line through the coupling circuit 22, and the first data signal and the second control signal may be coupled from the power line to the PLC chip 21 through the coupling circuit 22.

It may be understood that the second data signal sent by the data collector 20 is the second data signal received by the power converter 10 in the foregoing embodiment, and the first control signal sent by the data collector 20 is the first control signal received by the power converter 10 in the foregoing embodiment. Correspondingly, the first data signal received by the data collector 20 is the first data signal sent by the power converter 10 in the foregoing embodiment. The second control signal received by the data collector 20 is the second control signal sent by the power converter 10 in the foregoing embodiment.

It may be understood that a structure of the PLC chip 21 in the data collector 20 may be the same as a structure of a PLC chip 11 in the power converter 10. For example, refer to FIG. 4 to FIG. 7. The PLC chip 21 may include a processor 211, a first transceiver controller 212, and a second transceiver controller 213. For functions of the processor 211, the first transceiver controller 212, and the second transceiver controller 213, refer to the foregoing descriptions. Details are not described herein again.

Optionally, still refer to FIG. 4. The data collector 20 may further include a first filter circuit 23 and a second filter circuit 24. In addition, both the first filter circuit 23 and the second filter circuit 24 are connected between the PLC chip 21 and the coupling circuit 22. The first filter circuit 23 is configured to filter a data signal, to pass a signal on the first frequency band and at least filter out a signal on the second frequency band. The second filter circuit 24 is configured to filter a control signal, to pass a signal on the second frequency band and at least filter out a signal on the first frequency band.

In the data collector provided in this embodiment of this application, that the first filter circuit filters the data signal on the first frequency band to filter out the signal on the second frequency band can effectively avoid impact on transmission quality of the control signal caused by entering a transmission path of the control signal by the signal on the second frequency band. That the second filter circuit filters the control signal on the second frequency band to filter out the signal on the first frequency band can effectively avoid impact on transmission performance of the data signal caused by entering a transmission path of the data signal by the signal on the first frequency band.

Optionally, the PLC chip 21 may be configured to: receive the first data signal on the first frequency band, send the second data signal on the first frequency band, and send the first control signal on the second frequency band.

Correspondingly, the coupling circuit 12 is configured to: couple, to the power line, the second data signal and the first control signal that are sent by the PLC chip 21, receive, from the power line, the first data signal from the power converter 10, and transmit the first data signal to the PLC chip 21. The first data signal indicates the running status of the power converter 10, and the second data signal indicates to query the running status of the power converter 10. For example, the first data signal may include running status data of the power converter 10, and the second data signal may include a data query instruction delivered by the data collector 20. The first control signal indicates to adjust the running status of the power converter 10. For example, the first control signal may include a scheduling control instruction delivered by the data collector 20.

Optionally, a structure of the first filter circuit 23 in the data collector 20 may be the same as a structure of a first filter circuit 13 in the power converter 10. For example, refer to FIG. 4. The first filter circuit 23 may include a first transmit filter 231 and a first receive filter 232. A passband of the first transmit filter 231 and a passband of the first receive filter 232 both include the first frequency band and neither overlap the second frequency band. The first receive filter 232 is configured to filter the first data signal, and the first transmit filter 231 is configured to filter the second data signal.

Alternatively, refer to FIG. 5. The first filter circuit 23 may include a first transceiver filter 233. A passband of the first transceiver filter 233 includes the first frequency band and does not overlap the second frequency band. The first transceiver filter 233 is configured to filter the first data signal and the second data signal.

In addition, the data collector 20 may further include a first power amplifier PA 3 and a second power amplifier PA 4. The first power amplifier PA 3 is configured to amplify the second data signal, and the second power amplifier PA 4 is configured to amplify the first control signal.

Optionally, the PLC chip 21 may be further configured to receive the second control signal on the second frequency band. The second control signal may include an acknowledgment message that is reported by the power converter 10 and that is for responding to the scheduling control instruction.

For example, the coupling circuit 22 may be further configured to receive, from the power converter 10, the second control signal that is on the second frequency band and that is transmitted over the power line. The second filter circuit 24 may be further configured to: filter the second control signal, to pass a signal on the second frequency band and at least filter out a signal on the first frequency band; and transmit a filtered second control signal to the PLC chip 21.

A structure of the second filter circuit 24 in the data collector 20 may be the same as a structure of a second filter circuit 14 in the power converter 10. For example, refer to FIG. 5. The second filter circuit 24 may include a second transceiver filter 243. A passband of the second transceiver filter 243 includes the second frequency band and does not overlap the first frequency band. In addition, the second transceiver filter 243 is configured to filter the first control signal and the second control signal.

Alternatively, refer to FIG. 6. The second filter circuit 24 may include a second transmit filter 241 and a second receive filter 242. A passband of the second transmit filter 241 and a passband of the second receive filter 242 both include the second frequency band and neither overlap the first frequency band. The second transmit filter 241 is configured to filter the first control signal, and the second receive filter 242 is configured to filter the second control signal.

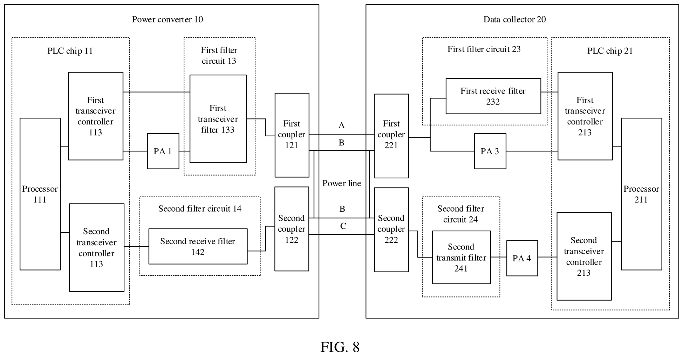

It may be further understood that, in a scenario in which a transceiver channel 2 in the power converter 10 reserves only a signal receiving function and does not have a signal sending function, a transceiver channel 2 in the data collector 20 may reserve only a signal sending function and does not have a signal receiving function. The transceiver channel 2 in the data collector 20 may include the second transceiver controller 213 and the second filter circuit 24. If the transceiver channel 2 in the data collector 20 reserves only a signal sending function, as shown in FIG. 4 and FIG. 8, the second filter circuit 24 may include only a second transmit filter 241, and does not need to include a receive filter (for example, a second receive filter 242) configured to filter a receiving signal. In this way, a structure of the data collector 20 can be effectively simplified, and hardware costs of the data collector 20 can be reduced.

In addition, refer to FIG. 8. The first filter circuit 23 in a transceiver channel 1 of the data collector 20 may include only a first receive filter 232, and a transmit filter configured to filter a sending signal does not need to be disposed. Because the transceiver channel 2 in the data collector 20 only reserves a signal sending function and does not have a signal receiving function, impact of a sending signal of the transceiver channel 1 on the transceiver channel 2 does not need to be considered. Therefore, a transmit filter may not need to be disposed in the transceiver channel 1. In this way, the structure of the data collector 20 can be further simplified, and hardware costs of the data collector 20 can be reduced.

It may be further understood that a structure of the coupling circuit 22 in the data collector 20 may be the same as a structure of the coupling circuit 12 in the power converter 10. For example, refer to FIG. 5 and FIG. 6. The coupling circuit 22 may include a coupler 220. The coupler 220 is separately connected to the first filter circuit 23 and the second filter circuit 24, and is configured to couple signals on two different frequency bands.

Alternatively, refer to FIG. 7 and FIG. 8. The coupling circuit 22 may include a first coupler 221 and a second coupler 222. The first coupler 221 is connected to the first filter circuit 23, and is configured to couple a signal on the first frequency band. The second coupler 222 is connected to the second filter circuit 24, and is configured to couple a signal on the second frequency band.

In this embodiment of this application, as shown in FIG. 10, in a scenario in which the first filter circuit 23 in the data collector includes the first receive filter 232 but no transmit filter is disposed in the first filter circuit 23, the data collector may further work in a single-channel mode, to be compatible with a single-channel device (for example, a single-channel power converter). In the single-channel mode, the data collector may communicate with another device through one channel (for example, the transceiver channel 1), and the data collector may close the other channel. For example, refer to FIG. 10. The data collector may turn off a PA 2, to close the transceiver channel 2, that is, stop sending a signal through the transceiver channel 2.

Optionally, when the data collector works in the single-channel mode, the PLC chip in the data collector may transmit a signal in a third frequency band. For example, an operating frequency band of the transceiver channel 1 may be switched to the third frequency band. The third frequency band is wide, to ensure good communication quality of a single channel. For example, the third frequency band may include the first frequency band and the second frequency band.

In a scenario in which the data collector can implement switching between the single-channel mode and a dual-channel mode, a passband range of the first receive filter 232 in the data collector may be wide. For example, the passband of the first receive filter 232 may be the third frequency band or slightly greater than the third frequency band. Therefore, it can be ensured that in the single-channel mode, a signal on the third frequency band can pass through the first receive filter 232, to ensure good communication quality of a single channel.

It may be understood that FIG. 9 and FIG. 10 are specific details of FIG. 4. In embodiments shown in FIG. 9 and FIG. 10, the coupling circuit 22 in the embodiment shown in FIG. 4 specifically includes signal transformers T3 and T4, capacitors connected to the signal transformers T3 and T4, and capacitors connected to filters. In addition, with reference to FIG. 9 and FIG. 10, the data collector may further include a connector, and the coupling circuit 22 may be connected to the power line through the connector.

For a structure, an operating principle, and a technical effect of each circuit in the data collector 20, refer to related descriptions in the foregoing embodiment of the power converter 10. Details are not described herein again.

In conclusion, this embodiment of this application provides a data collector. A PLC chip in the data collector can transmit a data signal on a first frequency band, and transmit a control signal on a second frequency band. Signals of different types can be transmitted on the first frequency band and the second frequency band, and the first frequency band and the second frequency band do not overlap each other. Therefore, interference between the signals of different types can be effectively avoided, and simultaneous transmission of the signals of different types can be implemented. This not only effectively enhances flexibility of signal transmission, but also effectively avoids a transmission delay caused by a transmission conflict between the signals of different types in a PLC system, ensuring high timeliness for the data collector to perform data query and scheduling control on a power converter.

It may be further understood that, as shown in FIG. 1 and FIG. 2, the data collector 20 is used as the CCO of the PLC system, and can communicate with the plurality of power converters 10 (STAs of the PLC system). The following describes a communication process of the PLC system by using an architecture shown in FIG. 6 as an example, and an example in which a single data collector 20 communicates with a single STA (for example, a power converter 10).

Because each channel in the data collector 20 uses a same frequency band for signal sending and receiving, to avoid co-channel interference, each transceiver controller in the data collector 20 controls signal sending and receiving to not be simultaneously performed. That is, for each channel, when the channel is in a sending state, a receiving function is in a disabled state; and when the channel is in a receiving state, a sending function is in a disabled state.

When a channel 1 of the data collector 20 is in a sending state, if a channel 2 of the data collector 20 is in a receiving state in this case, an out-of-band signal (namely, a signal outside a first frequency band) of the channel 1 can be effectively filtered out after passing through a first transmit filter 231. Correspondingly, after the out-of-band signal arrives at a second receive filter 242 through a coupler 220, impact on a receiving signal processed by the second receive filter 242 may be ignored. In other words, because passbands of the first transmit filter 231 and the second receive filter 242 do not overlap, that is, there is isolation effect between the two filters, a sending signal of the channel 1 does not affect a receiving signal of the channel 2. If the channel 2 is in a sending state, the sending signal of the channel 1 is not affected.

When the channel 1 of the data collector 20 is in a receiving state, if the channel 2 of the data collector 20 is in a sending state in this case, an out-of-band signal (namely, a signal outside a second frequency band) of the channel 2 can be effectively filtered out after passing through a second transmit filter 241. Correspondingly, after the out-of-band signal arrives at a first receive filter 232 through the coupler 220, impact on a receiving signal processed by the first receive filter 232 may be ignored. Because passbands of the first receive filter 232 and the second transmit filter 241 do not overlap, that is, there is isolation effect between the two filters, a sending signal of the channel 2 does not affect a receiving signal of the channel 1. If the channel 2 is in a receiving state, the receiving signal of the channel 1 is not affected.

Based on a same principle, signal sending and receiving of the channel 2 of the data collector 20 are not affected by the channel 1. In addition, the power converter 10 serves as the STA, and signal sending and receiving of a channel 1 of the power converter 10 and signal sending and receiving of a channel 2 do not affect each other.

The following describes a communication process of the PLC system by using an architecture shown in FIG. 5 as an example, and an example in which a single data collector 20 communicates with a single STA (for example, a power converter 10).

When a channel 1 of the data collector 20 is in a sending state, if a channel 2 of the data collector 20 is in a receiving state in this case, an out-of-band signal (namely, a signal outside a first frequency band) of the channel 1 can be effectively filtered out after passing through a first transceiver filter 233. Correspondingly, after the out-of-band signal arrives at a second transceiver filter 243 through a coupler 220, impact on a receiving signal processed by the second transceiver filter 243 may be ignored. In other words, because passbands of the first transceiver filter 233 and the second transceiver filter 243 do not overlap, that is, there is isolation effect between the two filters, a sending signal of the channel 1 does not affect a receiving signal of the channel 2. If the channel 2 is in a sending state, the sending signal of the channel 1 is not affected.

When the channel 1 of the data collector 20 is in a receiving state, if the channel 2 of the data collector 20 is in a sending state in this case, an out-of-band signal (namely, a signal outside a second frequency band) of the channel 2 can be effectively filtered out after passing through the second transceiver filter 243. Correspondingly, after the out-of-band signal arrives at the first transceiver filter 233 through the coupler 220, impact on a receiving signal processed by the first transceiver filter 233 may be ignored. In other words, because passbands of the first transceiver filter 233 and the second transceiver filter 243 do not overlap, that is, there is isolation effect between the two filters, a sending signal of the channel 2 does not affect a receiving signal of the channel 1. If the channel 2 is in a receiving state, the receiving signal of the channel 1 is not affected.

Based on a same principle, signal sending and receiving of the channel 2 of the data collector 20 are not affected by the channel 1. In addition, the power converter 10 serves as the STA, and signal sending and receiving of a channel 1 of the power converter 10 and signal sending and receiving of a channel 2 do not affect each other.

The following describes a communication process of the PLC system by using an architecture shown in FIG. 7 as an example, and an example in which a single data collector 20 communicates with a single STA (for example, a power converter 10).

When a channel 1 of the data collector 20 is in a sending state, if a channel 2 of the data collector 20 is in a receiving state in this case, an out-of-band signal (namely, a signal outside a first frequency band) of the channel 1 can be effectively filtered out after passing through a first transceiver filter 233. Correspondingly, after the out-of-band signal arrives at a second transceiver filter 243 through a first coupler 221 and a second coupler 222, impact on a receiving signal processed by the second transceiver filter 243 may be ignored. In other words, because passbands of the first transceiver filter 233 and the second transceiver filter 243 do not overlap, that is, there is isolation effect between the two filters, a sending signal of the channel 1 does not affect a receiving signal of the channel 2. If the channel 2 is in a sending state, the sending signal of the channel 1 is not affected.

When the channel 1 of the data collector 20 is in a receiving state, if the channel 2 of the data collector 20 is in a sending state in this case, an out-of-band signal (namely, a signal outside a second frequency band) of the channel 2 can be effectively filtered out after passing through the second transceiver filter 243. Correspondingly, after the out-of-band signal arrives at the first transceiver filter 233 through the second coupler 222 and the first coupler 221, impact on a receiving signal processed by the first transceiver filter 233 may be ignored. In other words, because passbands of the first transceiver filter 233 and the second transceiver filter 243 do not overlap, that is, there is isolation effect between the two filters, a sending signal of the channel 2 does not affect a receiving signal of the channel 1. If the channel 2 is in a receiving state, the receiving signal of the channel 1 is not affected.

Based on a same principle, signal sending and receiving of the channel 2 of the data collector 20 are not affected by the channel 1. In addition, the power converter 10 serves as the STA, and signal sending and receiving of a channel 1 of the power converter 10 and signal sending and receiving of a channel 2 do not affect each other.

The following describes a communication process of the PLC system by using an architecture shown in FIG. 8 as an example, and an example in which a single data collector 20 communicates with a single STA (for example, a power converter 10).

A channel 2 (namely, a control channel) in the data collector 20 reserves only a unidirectional sending function. Because a channel 1 uses a same frequency band for signal sending and receiving, to avoid co-channel interference, a second transceiver controller 213 in the data collector 20 controls signal sending and receiving to not be simultaneously performed. That is, for the channel 1 (namely, a data collection channel), when the channel 1 is in a sending state, a receiving function is in a disabled state; and when the channel 1 is in a receiving state, a sending function is in a disabled state.

When the channel 1 of the data collector 20 is in a sending state, because the channel 2 of the data collector 20 does not have a receiving function, a sending signal of the channel 1 does not affect the channel 2.

When the channel 1 of the data collector 20 is in a receiving state, if the channel 2 of the data collector 20 is in a sending state in this case, an out-of-band signal (namely, a signal outside a second frequency band) of the channel 2 can be effectively filtered out after passing through a second transmit filter 241. Correspondingly, the out-of-band signal arrives at a first receive filter 222 through a second coupler 222 and a first coupler 221, and impact on a receiving signal processed by the first receive filter 222 may be ignored. In other words, because passbands of the second transmit filter 241 and the first receive filter 222 do not overlap, that is, there is isolation effect between the two filters, and there is also isolation effect between the two couplers, a sending signal of the channel 2 does not affect a receiving signal of the channel 1. If the channel 2 is in a receiving state, the receiving signal of the channel 1 is not affected.

When a channel 1 of the power converter 10 is in a sending state, an out-of-band signal (namely, a signal outside a first frequency band) of the channel 1 can be effectively filtered out after passing through a first transceiver filter 133. Correspondingly, after the out-of-band signal arrives at a second receive filter 142 through the first coupler 221 and the second coupler 222, impact on a receiving signal processed by the second receive filter 142 may be ignored. In other words, because of isolation effect between the two filters and isolation effect between the two couplers, a sending signal of the channel 1 does not affect a receiving signal of the channel 2.

When the channel 1 of the power converter 10 is in a receiving state, because the channel 2 of the power converter 10 does not have a sending function, a receiving signal of the channel 1 is not affected.

The foregoing description is provided by using an example in which the power converter 10 is the STA in the PLC system. It may be understood that, in some scenarios, the power converter 10 may alternatively be a CCO in the PLC system.

It may be further understood that a photovoltaic power station system to which the solutions provided in embodiments of this application are applied may be a ground power station, an industrial and commercial power station, a household power station, or the like. For example, the solutions provided in embodiments of this application may be applied to a scenario, for example, a centralized power station on the ground, a mountain, or the like, an industrial and commercial distributed power station, a distributed base station remote power supply system, or a distributed video surveillance remote power supply system. Alternatively, the solutions provided in embodiments of this application may be further applied to a communication power supply system, an energy storage system, or the like in which a plurality of devices are connected in parallel. In other words, a power supply device in the communication power supply system or the energy storage system may also include a PLC chip and two filter circuits provided in embodiments of this application, and can communicate with each other in a dual-channel manner. In addition, in the solutions provided in embodiments of this application, a power line may be an alternating current power cable, or may be a direct current power cable. If the power line is a direct current power cable, a coupler may be connected to a positive line and a negative line in the direct current power cable.

In embodiments of this application, the terms "first", "second", and "third" are merely used for description, but shall not be understood as an indication or implication of relative importance. The term "at least one" means one or more, and "a plurality of" means two or more.

The term "and/or" in this application is merely an association relationship for describing associated objects and indicates that three relationships may exist. For example, A and/or B may indicate the following three cases: Only A exists, both A and B exist, and only B exists. In addition, the character "/" in this specification usually indicates an "or" relationship between the associated objects.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A power converter, wherein the power converter comprises a power line communication, PLC chip and a coupling circuit;
the PLC chip is connected to the coupling circuit, and the coupling circuit is configured to connect to a data collector through a power line;
the PLC chip is configured to: transmit a data signal on a first frequency band, and transmit a control signal on a second frequency band, wherein the data signal indicates a running status of the power converter, or indicates to query a running status of the power converter; and the control signal indicates to adjust the running status of the power converter; and
both the data signal on the first frequency band and the control signal on the second frequency band are coupled to the power line through the coupling circuit, and the second frequency band does not overlap the first frequency band.

2. The power converter according to claim 1, wherein the power converter further comprises a first filter circuit and a second filter circuit, and both the first filter circuit and the second filter circuit are connected between the PLC chip and the coupling circuit;
the first filter circuit is configured to filter the data signal to filter out a signal on the second frequency band; and
the second filter circuit is configured to filter the control signal to filter out a signal on the first frequency band.

3. The power converter according to claim 2, wherein the PLC chip is configured to: send a first data signal on the first frequency band, receive a second data signal on the first frequency band, and receive a first control signal on the second frequency band, wherein the first data signal indicates the running status of the power converter, the second data signal indicates to query the running status of the power converter, and the first control signal indicates to adjust the running status of the power converter;
the first filter circuit comprises a first transmit filter and a first receive filter, the second filter circuit comprises a second receive filter, a passband of the first transmit filter and a passband of the first receive filter both comprise the first frequency band and neither overlap the second frequency band, and a passband of the second receive filter comprises the second frequency band and does not overlap the first frequency band;
the first transmit filter is configured to filter the first data signal, and the first receive filter is configured to filter the second data signal; and
the second receive filter is configured to filter the first control signal.

4. The power converter according to claim 3, wherein the first filter circuit further comprises a switch, and the switch is connected in parallel to the first transmit filter; and
the PLC chip is further configured to control turn-on and turn-off of the switch.

5. The power converter according to claim 2, wherein the PLC chip is configured to: send a first data signal on the first frequency band, receive a second data signal on the first frequency band, and receive a first control signal on the second frequency band, wherein the first data signal indicates the running status of the power converter, the second data signal indicates to query the running status of the power converter, and the first control signal indicates to adjust the running status of the power converter;
the first filter circuit comprises a first transceiver filter, the second filter circuit comprises a second receive filter, a passband of the first transceiver filter comprises the first frequency band and does not overlap the second frequency band, and a passband of the second receive filter comprises the second frequency band and does not overlap the first frequency band;
the first transceiver filter is configured to filter the first data signal and the second data signal; and
the second receive filter is configured to filter the first control signal.

6. The power converter according to claim 2, wherein the PLC chip is configured to: send a first data signal on the first frequency band, receive a second data signal on the first frequency band, receive a first control signal on the second frequency band, and send a second control signal on the second frequency band, wherein the first data signal indicates the running status of the power converter, the second data signal indicates to query the running status of the power converter, the first control signal indicates to adjust the running status of the power converter, and the second control signal is a response signal of the first control signal;
the first filter circuit comprises a first transmit filter and a first receive filter, the second filter circuit comprises a second transmit filter and a second receive filter, a passband of the first transmit filter and a passband of the first receive filter both comprise the first frequency band and neither overlap the second frequency band, and a passband of the second transmit filter and a passband of the second receive filter both comprise the second frequency band and neither overlap the first frequency band;
the first transmit filter is configured to filter the first data signal, and the first receive filter is configured to filter the second data signal; and
the second receive filter is configured to filter the first control signal, and the second transmit filter is configured to filter the second control signal.

7. The power converter according to claim 2, wherein the PLC chip is configured to: send a first data signal on the first frequency band, receive a second data signal on the first frequency band, receive a first control signal on the second frequency band, and send a second control signal on the second frequency band, wherein the first data signal indicates the running status of the power converter, the second data signal indicates to query the running status of the power converter, the first control signal indicates to adjust the running status of the power converter, and the second control signal is a response signal of the first control signal;
the first filter circuit comprises a first transceiver filter, the second filter circuit comprises a second transceiver filter, a passband of the first transceiver filter comprises the first frequency band and does not overlap the second frequency band, and a passband of the second transceiver filter comprises the second frequency band and does not overlap the first frequency band;
the first transceiver filter is configured to filter the first data signal and the second data signal; and
the second transceiver filter is configured to filter the first control signal and the second control signal.

8. The power converter according to any one of claims 1 to 7, wherein the coupling circuit comprises a coupler, and the coupler is configured to be coupled to a first phase wire and a second phase wire in the power line.

9. The power converter according to any one of claims 1 to 7, wherein the coupling circuit comprises a first coupler and a second coupler, the first coupler is configured to be coupled to a first phase wire and a second phase wire in the power line, and the second coupler is configured to be coupled to the second phase wire and a third phase wire in the power line; and
the first coupler is configured to couple a signal on the first frequency band, and the second coupler is configured to couple a signal on the second frequency band.

10. A data collector, wherein the data collector comprises a PLC chip and a coupling circuit;
the PLC chip is connected to the coupling circuit, and the coupling circuit is configured to connect to a power converter through a power line;
the PLC chip is configured to: transmit a data signal on a first frequency band, and transmit a control signal on a second frequency band, wherein the data signal indicates a running status of the power converter, or indicates to query a running status of the power converter; and the control signal indicates to adjust the running status of the power converter; and
both the data signal on the first frequency band and the control signal on the second frequency band are coupled to the power line through the coupling circuit, and the second frequency band does not overlap the first frequency band.

11. The data collector according to claim 10, wherein the data collector further comprises a first filter circuit and a second filter circuit, and both the first filter circuit and the second filter circuit are connected between the PLC chip and the coupling circuit;
the first filter circuit is configured to filter the data signal to filter out a signal on the second frequency band; and
the second filter circuit is configured to filter the control signal to filter out a signal on the first frequency band.

12. The data collector according to claim 11, wherein the PLC chip is configured to: receive a first data signal on the first frequency band, send a second data signal on the first frequency band, and send a first control signal on the second frequency band, wherein the first data signal indicates the running status of the power converter, the second data signal indicates to query the running status of the power converter, and the first control signal indicates to adjust the running status of the power converter;
the first filter circuit comprises a first receive filter and a first transmit filter, the second filter circuit comprises a second transmit filter, a passband of the first transmit filter and a passband of the first receive filter both comprise the first frequency band and neither overlap the second frequency band, and a passband of the second transmit filter comprises the second frequency band and does not overlap the first frequency band;
the first receive filter is configured to filter the first data signal, and the first transmit filter is configured to filter the second data signal; and
the second transmit filter is configured to filter the first control signal.

13. A PLC system, wherein the PLC system comprises the data collector according to any one of claims 10 to 12 and at least one power converter according to any one of claims 1 to 9; and
the data collector and the at least one power converter are connected to each other through a power line, to perform signal exchange through the power line.
